# EUROPEAN PATENT APPLICATION

(11) **EP 3 709 507 A1**
(43) Date of publication of application: **16.09.2020**
(21) Application number: 20161398.1
(22) Date of filing: 06.03.2020
(51) Int. Cl.: H02S 20/30, H02S 30/20

(54) **SOLAR PANEL INSTALLATION, A SYSTEM AND PROCEDURE FOR ITS INSTALLATION**

(30) Priority: 14.03.2019 NL 2022744
(71) Applicant: HydroSun B.V., 9101 WV Dokkum (NL)
(72) Inventor: Jellema, Symen, NL-9101 PK Dokkum (NL)
(74) Representative: Arnold & Siedsma

(57) **Abstract**

The present invention relates to a solar panel installation, a system and a method for placing thereof. The solar panel installation comprises:
- at least two solar panels, each with a front surface and a rear surface and with a first and a second peripheral edge part lying opposite each other, wherein the solar panels are pivotally connected to each other close to their first peripheral edge parts;
- at least two base elements, wherein each of the at least two solar panels is pivotally connected close to the second peripheral edge parts thereof to one of the respective at least two base elements,
wherein, in a state of use of the solar panel installation, an angle which is defined between the rear surfaces of two mutually pivotally connected solar panels is obtuse.

## Description

The present invention relates to a solar panel installation.

Solar panel installations are per se known for generating electricity. Different types of embodiments of solar panel installations are known. An embodiment on land is thus known, wherein the solar panels are mounted on a frame which is positioned on or secured to a hard ground surface. Another per se known embodiment of a solar panel installation is one on water, wherein the solar panels are for instance mounted on a frame which floats on water.

A drawback of the known solar panel installation is that installation thereof can be relatively time-consuming and can thereby be relatively expensive.

The present invention has for its object to provide a solar panel installation whereby the above stated problem is obviated or at least reduced. It can be a particular object of the invention to provide a solar panel installation which can be installed quickly and/or lower cost and/or can be applied both on water and on land.

This object is achieved with a solar panel installation, comprising:
- at least two solar panels, each with a front surface and a rear surface and with a first and a second peripheral edge part lying opposite each other, wherein the solar panels are pivotally connected to each other close to their first peripheral edge parts;
- at least two base elements, wherein each of the at least two solar panels is pivotally connected close to the second peripheral edge parts thereof to one of the respective at least two base elements,
wherein, in a state of use of the solar panel installation, an angle which is defined between the rear surfaces of two mutually pivotally connected solar panels is obtuse.

By providing at least two solar panels which are pivotally connected to each other close to their first peripheral edge parts and providing at least two base elements, wherein each of the at least two solar panels is pivotally connected close to the second peripheral edge part thereof to one of the respective at least two base elements, mutual connection of the solar panels and the base elements can for instance already take place in the factory, so that the installation can be transported to a setup location as prefab installation and can there be installed relatively quickly and/or relatively cheaply.

Alternatively or additionally, the solar panel installation according to the invention provides the advantage that with the hinge connections a pivotable structure is obtained, whereby, for instance when the solar panel installation is placed on water, the solar panel structure can co-displace with the waves on the water to some extent. The load on the structure and connections between different components thereof can hereby be reduced, whereby the chance of wear and/or breaking of the structure and the collections can be reduced. On land this can provide the advantage that, if the surface were not completely level, the installation can adapt to possible unevenness.

Alternatively or additionally, a stable structure is obtained. Owing to the hinge connections a triangular structure is obtained in side view of the solar panel installation, wherein the first peripheral edge parts together and the second peripheral edge parts individually, together with a respective base element, form the three points of the triangle. This triangular structure has the advantage that it is very stable but that, because the solar panels are pivotally connected to each other close to the first peripheral edge parts thereof and to the base elements close to the second peripheral edge parts thereof, it is at the same time also pivotable, which can provide the above stated advantages.

The solar panel comprises two main surfaces, i.e. the front surface and the rear surface. The front surface of the solar panel is directed substantially away from a surface on which the solar panel is situated, preferably toward the sun. The rear surface of the solar panel lies opposite the front surface and is directed substantially toward the surface on which the solar panel is situated. The surface can comprise, among other things, water and soil, but for instance also a flat roof on for instance a commercial premises or other building. In addition, the solar panel also comprises a peripheral edge. Together with the front surface and the rear surface, this peripheral edge can form at least substantially the whole outer surface of the solar panel. The peripheral edge can have any suitable form. The peripheral edge has in practice for instance a rectangular or square cross-sectional form. The peripheral edge can comprise a plurality of peripheral edge parts, for instance said at least two mutually opposite peripheral edge parts.

The solar panels can be pivotally connected to the base element at any desired position close to their second peripheral edge part. In an embodiment in which the base element is beam-shaped, comprising at least an upper surface, lower surface and two side surfaces, the second peripheral edge part can for instance be connected to the side surface, the upper surface or the edge between the side surface and upper surface of the respective base element.

The installation has in practice more than two solar panels and more than two base elements, wherein a solar panel is in each case connected to an adjacent solar panel close to the first peripheral edge parts thereof and connected to a base element close to the second peripheral edge part thereof. The triangular structure with two solar panels pivotally connected close to their first peripheral edge parts and pivotally connected close to their second peripheral edge parts to one of the base elements can also be referred to as a basic module. In order to extend the basic module an extension module can be coupled to the basic module, or further extension modules can be coupled to previous extension modules. An extension module comprises two solar panels and one base element. The solar panels are pivotally connected to each other close to their first peripheral edge parts, wherein one of the two solar panels is pivotally connected to the one base element of the extension module close to the second peripheral edge part of that solar panel. The other solar panel is here not connected to the base element of the extension module of which it forms part, but can be connected to a base element of the basic module or an adjacent extension module. A desired number of extension modules can thus be pivotally coupled to each other and/or to the basic module, whereby a solar panel installation with a relatively large number of solar panels is obtained.

The invention also provides such an extension module, comprising:
- two solar panels, each with a front surface and a rear surface and with a first and a second peripheral edge part lying opposite each other, wherein the solar panels are pivotally connected to each other close to their first peripheral edge parts;
- one base element, wherein one of the two solar panels is pivotally connected close to the second peripheral edge part thereof to the one base element,
wherein, in a state of use of the solar panel installation, an angle which is defined between the rear surfaces of two mutually pivotally connected solar panels is obtuse.

The base elements are preferably an element which can be disposed in floating manner or on a fixed surface, with any suitable form, such as for instance cylindrical or beam-shaped. Alternatively or additionally, at least one base element can be formed by an already present securing element, such as for instance a beam, a post or any other securing element on land or water. The plurality of base elements can be both identical to and different from each other.

By providing a state of use wherein an angle which is defined between the rear surfaces of two mutually pivotally connected solar panels is obtuse, i.e. 90°-180°, the solar panel installation has in the state of use an extensive surface. This has the advantage that the yield of the solar panels is relatively high, because a relatively large amount of sunlight can thus be converted into electricity by the solar panels.

In an embodiment of the solar panel installation according to the invention the solar panel installation has a transport state wherein the angle is acute, wherein the solar panel installation is adjustable from at least the transport state to the state of use.

An acute angle is an angle of 0°-90°. By providing a solar panel installation with transport state in which the angle is acute the second peripheral edge parts and the base elements will be located closer together in the transport state than in the state of use, whereby the solar panel installation as a whole takes up a smaller area and is relatively compact. This has the advantage that the solar panel installation can be stored or transported in relatively compact state. The transport state can also be referred to as rest state or storage state.

Because the solar panel installation can be adjusted at least to the state of use from the transport state, the solar panel installation can for instance be easily stored or transported in the transport state, after which it can later be set to the state of use when the solar panel installation is located at the desired position. In an advantageous embodiment of the solar panel installation according to the invention the solar panel installation can also be adjusted from the state of use to the transport state. The solar panel installation can hereby for instance be set to the transport state again after use, after which the solar panel installation can be transported to another desired location or be stored for possible later use. In such an embodiment the solar panel installation is adjustable between the state of use and the transport state.

In a further embodiment of the solar panel installation according to the invention the base elements are disposed on a surface during use of the solar panel installation, and the first peripheral edge parts are situated above the second peripheral edge parts and the base elements. In this embodiment the first peripheral edge parts can be the upper peripheral edge parts of the solar panels and the second peripheral edge parts can be the lower peripheral edge parts of the solar panels.

In an advantageous embodiment of the solar panel installation according to the invention the solar panel installation comprises at least one limiting element for limiting the angle to a determined, maximum obtuse angle in the state of use of the solar panel installation.

By providing a limiting element the angle can be limited, whereby the angle cannot become greater than a determined, maximum obtuse angle. Because the angle cannot become greater than the determined, maximum angle, the solar panels will in practice form an angle to the horizontal, whereby water present thereon can slide off it. This for instance provides the advantage that in the case of rain the rain automatically runs off the solar panels, together with possible dirt on the solar panels. This gives the solar panels self-cleaning capability.

The at least one limiting element can be embodied in any desired manner.

The at least one limiting element can for instance be embodied as a limitation in the hinge connection between the solar panels close to the first peripheral edge parts and/or as a limitation in the hinge connection between the solar panels and the base elements.

Alternatively or additionally, the at least one limiting element comprises at least one strap, belt, chain, wire, rope or the like, which is connected on either side thereof to the base elements and/or the solar panels.

Because the strap, belt, chain, wire, rope or the like is connected on either side thereof to the two different base elements and/or solar panels, and is preferably not or hardly stretchable, the base elements cannot move further apart than the length of the strap allows, whereby the angle is limited in simple and/or reliable and/or effective manner. When the strap is attached between the solar panels, the strap is preferably attached close to the second peripheral edge parts of the solar panels.

In an embodiment of the solar panel installation according to the invention the solar panel installation further comprises at least one inverter, preferably placed on, in or at one of the base elements for the purpose of converting direct current generated by the at least two solar panels into alternating current.

The current which is generated by a solar panel is direct current, while almost all electrically powered electronic devices and machines use alternating current. By providing at least one inverter the direct current generated by the solar panels can be converted into alternating current, whereby the generated electricity can immediately be used for for instance electronic devices and machines. Alternatively or additionally, the electrical grid also uses alternating current, whereby the solar panels can also supply the generated electricity, once it has been converted into alternating current, to the electrical grid.

In a further embodiment of the solar panel installation according to the invention the solar panel installation comprises at least one wheel placed under at least one base element.

By providing at least one wheel under at least one base element the solar panel installation can easily move over a hard surface, for instance the ground or a roof. Owing to the at least one wheel, the distance between two adjacent base elements can easily be increased and optionally reduced. The solar panel installation can hereby on land be adjusted from the transport state to the state of use, and optionally from the state of use to the transport state, in simple manner and/or the angle is easily adjustable.

In an embodiment of the solar panel installation according to the invention at least the outer side of the base elements comprises high-density polyethylene (HDPE).

Because at least the outer side of the base elements comprises HDPE, a strong material is provided. Another or an additional advantage of HDPE is that, when the solar panel installation is disposed on water and the base elements are situated partially in water, no algal attachment results on the HDPE. Use can optionally be made of recycled HDPE, which can reduce the price for production of the base elements.

In a further embodiment of the solar panel installation according to the invention the at least one base element of the solar panel installation comprises at least one floating element.

By providing a base element which comprises a floating element, and is optionally particularly formed thereby, the solar panel installation can float when it is situated on water. The solar panel system can hereby also be used on water, whereby the solar panel system can be utilized on a plurality of underlying surfaces. In addition, the pivotable connections between the solar panels have the effect that the force on the connections, for instance as a result of waves in the water, is reduced. The pivoting connections enable the solar panels to co-displace with a possible swell, whereby unnecessary forces on the solar panels are prevented. Hereby, the lifespan of the solar panel installation is increased and a robust solar panel installation is obtained. It will be apparent to the skilled person that the number of base elements that comprises a floating element depends on the buoyancy of the floating element and the weight of the solar panel installation. In a further embodiment of the solar panel installation according to the invention at least one base element of the solar panel installation comprises at least one weighting element.

By providing a base element which comprises a weighting element, and is optionally particularly formed thereby, the solar panel installation can remain stably in place when situated on a hard surface. On a hard surface the solar panel installation is preferably positioned firmly on the ground, so that the solar panel installation is for instance not blown away when a hard wind gets under or comes up against the solar panels.

In an embodiment of the solar panel installation according to the invention the solar panel installation further comprises at least one drive means for moving the solar panel installation from the transport state into the state of use.

By providing at least one drive means the solar panel installation can easily be moved from the transport state to the state of use, for instance when the solar panel installation is situated on a hard surface.

The at least one drive means can for instance comprise a motor.

In a further embodiment of the solar panel installation according to the invention the angle is a maximum of 30°, preferably a maximum of 25° and most preferably a maximum of 20° in the transport state.

Because the angle is small, the at least two solar panels and the at least two base elements are positioned close together, whereby the solar panel installation obtains a compact form in the transport state and whereby the solar panel installation can be easily stored or transported in the transport state. The angle preferably amounts to 0°, so that the rear surfaces of the solar panels extend parallel close to or against each other, and thus take up as little space as possible.

In a further embodiment of the solar panel installation according to the invention the angle is a minimum of 90°, preferably a minimum of 115° and most preferably a minimum of 140°, and/or a maximum of 180°, preferably a maximum of 175° and most preferably a maximum of 170° in the state of use.

By providing the above stated minimum and maximum angles an advantageous position of the solar panels is obtained in the state of use. The solar panels preferably form an angle of 10°-15° to the horizontal, which makes the angle between the solar panels 150°-160°. This is the so-called East-West arrangement of solar panels. With the above stated minimum and maximum angles a position of the solar panels is obtained wherein the efficiency of the solar panels is high and/or wherein the solar panels retain their self-cleaning capability.

The invention further comprises a system comprising at least two solar panel installations according to one or more of the above described embodiments, in any combination and/or comprising any described feature, and further comprising at least one connecting element, wherein the at least two solar panel installations are placed adjacently of each other and the at least one connecting element connects the at least two solar panel installations to each other.

By providing a system with mutually connected solar panel installations a solar park with a large surface area can be obtained in simple manner.

The invention further also relates to a method for placing a solar panel installation, wherein the method comprises the following steps, to be performed in any suitable order:
a. providing a solar panel installation according to one or more of the above described embodiments, in any combination and/or comprising any described feature or a system as described above; and
b. placing the solar panel installation or the system on a surface in the state of use.

Such a method provides the same effects and advantages as stated for the solar panel installation or the system. As stated above, the surface can be any suitable surface, such as, though not exclusively, water, soil or a flat roof.

In an embodiment of the solar panel installation according to the invention the method further comprises the steps of:
c. transporting the solar panel installation to a desired location while the solar panel installation is in the transport state; and
d. moving the solar panel installation from the transport state to the state of use at the desired location,
wherein a solar panel installation according to at least claim 2 is provided in step a.

Step d. can be embodied in any suitable manner. Step d. can for instance be embodied by disposing the solar panel installation on the surface, wherein the solar panel installation automatically adjusts to its state of use under the influence of the force of gravity. This can take place very suitably on water in particular. Alternatively or additionally, a drive means as described above can be used to adjust the solar panel installation to its state of use.

If a system according to the invention is provided in step a., the method can comprise the additional step e. of mutually connecting at least two solar panel installations placed adjacently of each other with the at least one connecting element.

Further features, advantages and details of the invention are described on the basis of embodiments thereof, wherein reference is made to the accompanying drawings, in which:
- figure 1A is a schematic side view of a solar panel installation in a state of use;
- figure 1B is a schematic side view of the solar panel installation in transport state;
- figure 2A is a schematic perspective view of a solar panel installation at sea;
- figure 2B is a schematic perspective view of a solar panel installation on land;
- figure 3A is a schematic perspective view of a solar panel installation in the transport state;
- figure 3B is a schematic perspective view of a solar panel installation in the state of use; and
- figure 3C is a schematic perspective view of a system.

Corresponding or similar elements are designated in the figures with corresponding reference numerals, but increased by 100.

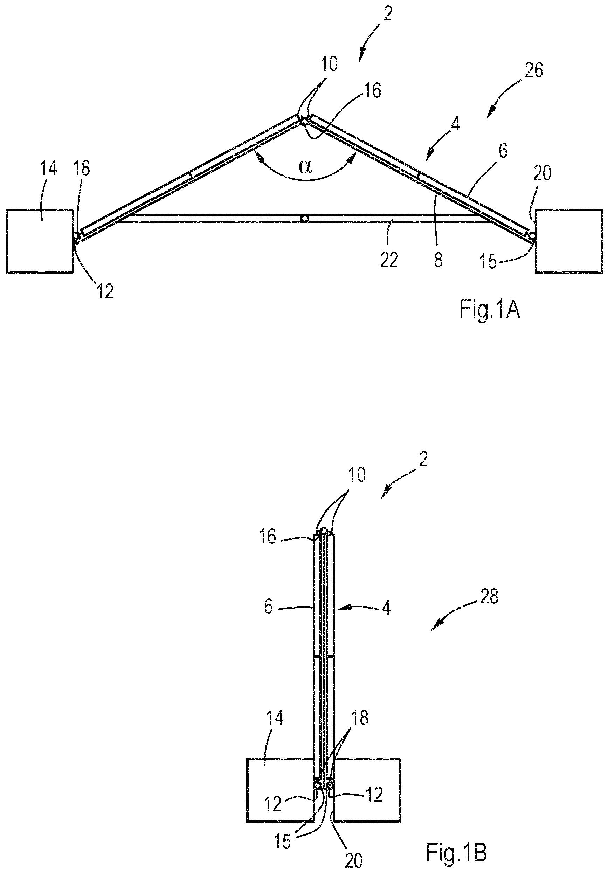

Figure 1 shows a solar panel installation 2 comprising solar panels 4 which are pivotally connected to each other close to their first peripheral edge part 10 by means of hinge elements 16. In this exemplary embodiment first peripheral edge part 10 is the upper peripheral edge part of solar panels 4. Solar panel 4 comprises a front surface 6 which is preferably directed toward the sun and a rear surface 8 which is directed substantially toward surface 24. Angle α is defined between the rear surfaces 8 of the mutually connected solar panels 4. In addition, solar panels 4 each comprise a second, in this case lower, peripheral edge part 12, which are pivotally connected to base elements 14 by means of hinge elements 18. In this embodiment peripheral edge part 12 is pivotally connected to a side surface of base element 14. Base element 14 comprises an outer side 20 which is for instance made of HDPE. Solar panel installation 2 further comprises a strap 22 which functions as a limiting element which limits angle α to a determined, maximum obtuse angle. In this exemplary embodiment hinge elements 18 comprise a hinge limiter 15, which hinge limiter 15 is also a limiting element, in addition to belt 22, which limits angle α to a determined, maximum obtuse angle. In figure 1A the solar panel installation 2 is in a state of use 26, wherein angle α is obtuse. In figure 1A the angle α is about 155°, although the angle α can be chosen in any desired manner. In figure 1B solar panel installation 2 is in a transport state 28, wherein angle α is acute. In the shown example the angle α is 0°, so that the rear surfaces 8 extend parallel to each other.

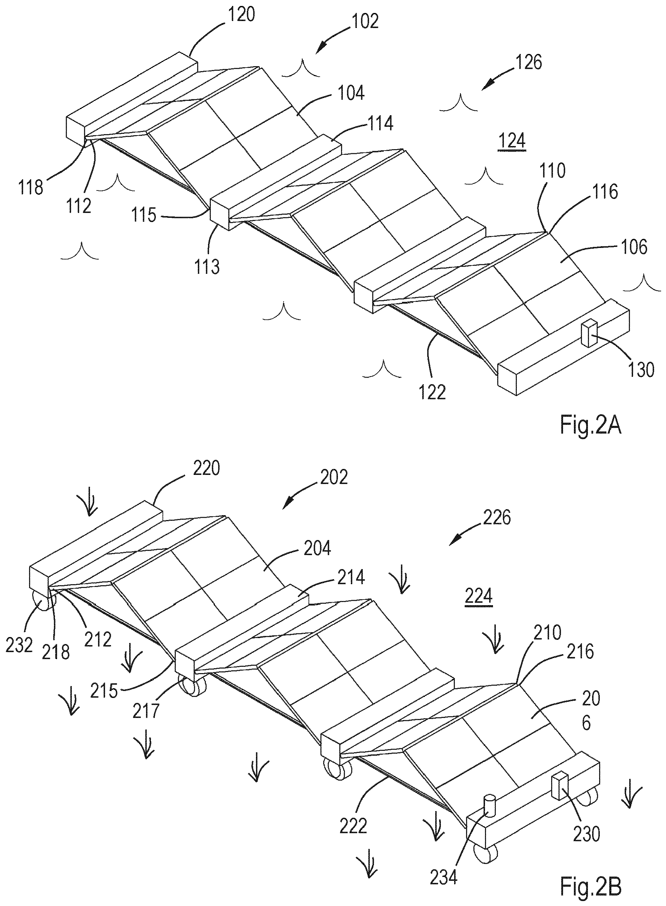

Figure 2A shows solar panel installation 102. Only the differences between the solar panel installation of the second embodiment according to figure 2a and the first embodiment of figures 1A and 1B be described here. For a further specification reference is made to the description associated with figures 1A and 1B. Solar panel installation 102 is situated on water 124 in state of use 126. Solar panel installation 102 comprises solar panels 104 which are pivotally connected to base elements 114, these comprising in this embodiment floating elements 113. Solar panel installation 102 can hereby co-displace with a possible swell in water 124, whereby unnecessary forces on solar panels 104 and/or the connections therebetween are prevented. Solar panel installation 102 further comprises an inverter 130 for converting direct current generated by the solar panels into alternating current. In this shown exemplary embodiment inverter 130 is arranged on the final or outermost base element 114 of a solar panel installation disposed in a row.

Figure 2B shows solar panel installation 202. Only the differences between the solar panel installation of the third embodiment according to figure 2B and the first embodiment of figures 1A and 1B will be described here. For a further specification reference is made to the description associated with figures 1A and 1B. Solar panel installation 202 is situated on ground 224 in state of use 226. The solar panel installation comprises solar panels 204 which are pivotally connected to base elements 214, these comprising in this embodiment weighting elements 217. Solar panel installation 202 further comprises an inverter 230 for converting the direct current generated by the solar panels into alternating current. Arranged under base elements 214 are wheels 232 so that base elements 214 of solar panel installation 202 can easily be displaced over the ground 224. In addition, solar panel installation 202 also comprises a drive means 234, in this embodiment a motor, which is connected to in any case one of the wheels 232 so that solar panel installation 202 can be moved from the transport state to the state of use 226 in simple manner.

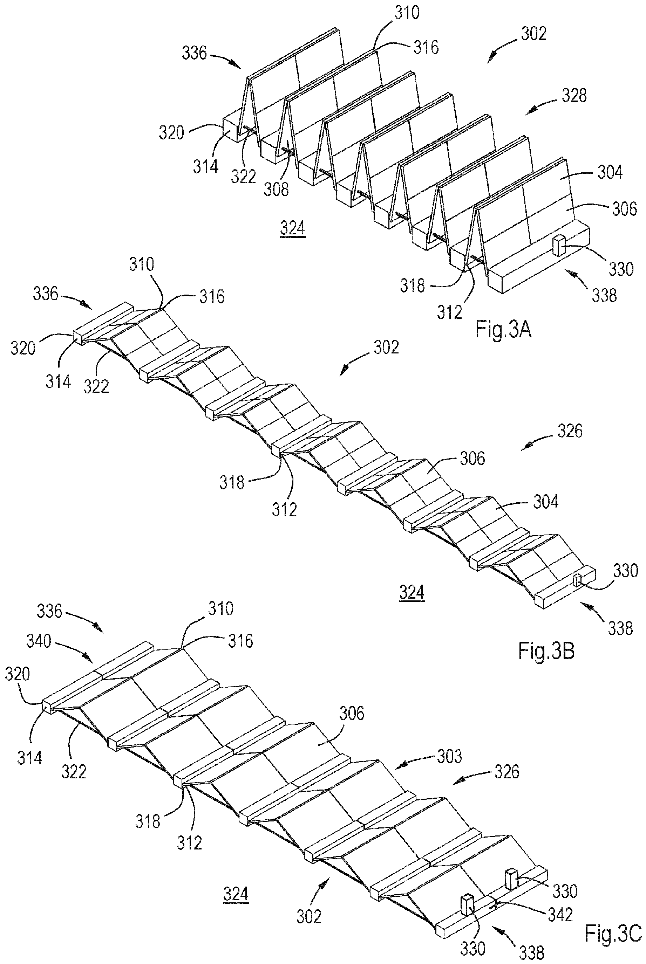

Figure 3A shows solar panel installation 302 which comprises solar panels 304 and which is situated on surface 324 in transport state 328. Only the differences between the solar panel installation of the embodiment according to figures 3A-C and the embodiment of figures 1A and 1B will be described here. For a further specification reference is made to the description associated with figures 1A and 1B. When surface 324 is water, solar panel installation 302 could be released, after which solar panel installation 302 automatically adjusts from transport state 328 to state of use 326 (figure 3B) under the influence of the force of gravity exerted on solar panels 304. When surface 324 is soil or another fixed surface, a first end 336 of the solar panel installation 302 arranged in a row could for instance remain at the same position, after which an opposite, second end 338 is pulled or driven in a direction away from first end 336, optionally by a motor. The method for moving solar panel installation 302 from transport state 328 to state of use 326, wherein first end 336 remains at the same position, can optionally also be applied when surface 324 is water. After solar panel installation 302 has been placed in state of use 326, a second solar panel installation 303 can be moved to its state of use and be connected to solar panel installation 302 using connecting elements 342 for the purpose of obtaining system 340 (figure 3C). The solar panel installations 302, 303 arranged in a row are here disposed parallel to and adjacently of each other in their longitudinal direction.

An advantageous embodiment provides solar panel installation 302 which is in transport state 328. In this state solar panel installation can be stored and/or be transported using for instance a truck to a desired location, for instance surface 324, in this case water. After this, solar panel installation 304 is placed on the water, after which it automatically moves from transport state 328 state of use 326 due to the force of gravity exerted on solar panels 304. After this, another solar panel installation 303 is moved to state of use 326 in the same way, after which solar panel installation 302 can be connected to solar panel installation 303. System 340, which is ready to convert solar energy into electricity, is hereby obtained.

The present invention is by no means limited to the above described embodiments thereof. The rights sought are defined by the following claims, within the scope of which many modifications can be envisaged.

## Claims

1. Solar panel installation, comprising:
- at least two solar panels, each with a front surface and a rear surface and with a first and a second peripheral edge part lying opposite each other, wherein the solar panels are pivotally connected to each other close to their first peripheral edge parts;
- at least two base elements, wherein each of the at least two solar panels is pivotally connected close to the second peripheral edge parts thereof to one of the respective at least two base elements,
wherein, in a state of use of the solar panel installation, an angle which is defined between the rear surfaces of two mutually pivotally connected solar panels is obtuse.

2. Solar panel installation according to claim 1, wherein in a transport state of the solar panel installation the angle is acute, wherein the solar panel installation is adjustable from at least the transport state to the state of use.

3. Solar panel installation according to claim 1 or 2, further comprising at least one limiting element for limiting the angle to a determined, maximum obtuse angle in the state of use of the solar panel installation.

4. Solar panel installation according to any one of the foregoing claims, wherein at least one limiting element comprises at least one strap, belt, chain, wire, rope or the like, which is connected on either side thereof to base elements and/or the solar panels.

5. Solar panel installation according to any one of the foregoing claims, further comprising at least one inverter, preferably placed on, in or at one of the base elements for the purpose of converting direct current generated by the at least two solar panels into alternating current.

6. Solar panel installation according to any one of the foregoing claims, further comprising at least one wheel placed under at least one base element.

7. Solar panel installation according to any one of the foregoing claims, wherein at least the outer side of the base elements comprises HDPE.

8. Solar panel installation according to any one of the foregoing claims, wherein at least one base element comprises at least one floating element.

9. Solar panel installation according to any one of the foregoing claims, wherein at least one base element comprises at least one weighting element.

10. Solar panel installation according to any one of the foregoing claims, further comprising at least one drive means for moving the solar panel installation from the transport state into the state of use.

11. Solar panel installation according to any one of the foregoing claims, wherein the angle is a maximum of 30°, preferably a maximum of 25° and most preferably a maximum of 20° in the transport state.

12. Solar panel installation according to any one of the foregoing claims, wherein the angle is a minimum of 90°, preferably a minimum of 115° and most preferably a minimum of 140°, and/or a maximum of 180°, preferably a maximum of 175° and most preferably a maximum of 170° in the state of use.

13. System comprising at least two solar panel installations according to any one of the foregoing claims, further comprising at least one connecting element,
wherein the at least two solar panel installations are placed adjacently of each other and the at least one connecting element connects the at least two solar panel installations to each other.

14. Method for placing a solar panel installation, comprising the following steps, to be performed in any suitable order:
a. providing a solar panel installation according to any one of the foregoing claims 1-12 or a system according to claim 13; and
b. placing the solar panel installation or the system on a surface in the state of use.

15. Method for placing a solar panel installation according to claim 14, further comprising the steps of:
c. transporting the solar panel installation to a desired location while the solar panel installation is in the transport state; and
d. moving the solar panel installation from the transport state to the state of use at the desired location,
wherein step a. comprises at least of providing a solar panel installation according to claim 2.
